# EUROPÄISCHE PATENTSCHRIFT

(11) **EP 3 859 146 B1**
(45) Veröffentlichungstag und Bekanntmachung des Hinweises auf die Patenterteilung: **19.04.2023**
(21) Anmeldenummer: 21154274.1
(22) Anmeldetag: 29.01.2021
(51) Int. Cl.: F03D 7/02, G01P 13/02

(54) **VERFAHREN ZUR BESTIMMUNG EINER WINDRICHTUNG AN EINER WINDENERGIEANLAGE, SYSTEM ZUR BESTIMMUNG EINER WINDRICHTUNG UND EINE WINDENERGIEANLAGE**
METHOD FOR DETERMINING A WIND DIRECTION ON A WIND TURBINE, SYSTEM FOR DETERMINING A WIND DIRECTION AND A WIND TURBINE
PROCÉDÉ DE DÉTERMINATION D'UNE DIRECTION DU VENT SUR UNE ÉOLIENNE, SYSTÈME DE DÉTERMINATION D'UNE DIRECTION DU VENT ET ÉOLIENNE

(30) Priorität: 31.01.2020 DE 102020102454
(43) Veröffentlichungstag der Anmeldung: 04.08.2021
(73) Patentinhaber: Wobben Properties GmbH, 26607 Aurich (DE)
(72) Erfinder: Martens, Michael, 26409 Wittmund (DE); Funcke, Gerke, 26122 Oldenburg (DE); Arnold, Matthias, 26603 Aurich (DE)
(74) Vertreter: Eisenführ Speiser

(56) Entgegenhaltungen:
- EP-A2- 1 460 266
- WO-A1-2013/083135
- WO-A2-2007/014400
- DE-A1-102012 019 663
- US-A1- 2007 086 893
- US-A1- 2014 140 843

## Beschreibung

Die Erfindung betrifft ein Verfahren zur Bestimmung einer Windrichtung an einer Windenergieanlage, ein System zur Bestimmung einer Windrichtung an einer Windenergieanlage und eine Windenergieanlage.

Windenergieanlagen sind grundsätzlich bekannt, sie erzeugen elektrische Leistung aus Wind. Windenergieanlagen betreffen in der Regel sogenannte Horizontalachsen-Windenergieanlagen, bei denen die Rotorachse im Wesentlichen horizontal angeordnet ist und die Rotorblätter eine im Wesentlichen senkrechte Rotorfläche überstreichen. Windenergieanlagen umfassen neben einem an einer Gondel angeordneten Rotor in der Regel einen Turm, auf dem die Gondel mit dem Rotor um eine im Wesentlichen vertikal ausgerichtete Achse drehbar angeordnet ist. Der Rotor umfasst üblicherweise drei Rotorblätter, wobei auch weniger oder mehr Rotorblätter vorgesehen sein können.

Durch die drehbare Anordnung der Gondel auf dem Turm kann der an der Gondel angeordnete Rotor in Windrichtung ausgerichtet werden. Dies bedeutet insbesondere, dass die Rotorachse im Wesentlichen parallel zur Windrichtung ausgerichtet ist. Die Windrichtung und die Windgeschwindigkeit sind jedoch keine statischen Größen. Die Windrichtung verändert sich kontinuierlich mit der Zeit. Das Gleiche gilt für die Windgeschwindigkeit. Da Windenergieanlagen eine begrenzte Höhe aufweisen, ernten diese den Wind unterhalb der freien Atmosphäre. Dieser Wind wird durch Reibung beeinflusst und kann insbesondere durch morphologische Strukturen weiter beeinflusst sein.

Windenergieanlagen sind insbesondere aus aerodynamischer Perspektive derart konstruiert, dass die Drehachse des Rotors im Wesentlichen parallel zur Windrichtung ausgerichtet ist. Zu diesem Zweck wird die Gondel relativ zum Turm rotatorisch gedreht, damit der Rotor im Wesentlichen nach Luv ausgerichtet ist. Bei Abweichungen von dieser Ausrichtung nach Luv reduziert sich der Wirkungsgrad der Windenergieanlage. Insbesondere im Teillastbereich resultiert eine nicht exakte Ausrichtung nach Luv zu einer geringeren Leistung der Windenergieanlage. Darüber hinaus resultiert eine nicht exakte Ausrichtung nach Luv in einer geringeren Lebensdauer, da die Anlagenlasten erhöht sein können.

Verfahren nach dem Stand der Technik zum Ermitteln einer Windrichtung an einer Windkraftanlage sind in DE 10 2018 001 172 A1, DE 31 19 736 C2 und DE 10 2014 223 853 A1 offenbart.

EP 1 460 266 A2 beschreibt ein Windenergieerzeugungssystem, das eine erzeugte Energie mit hoher Effizienz ausgeben und die Ausgangsleistung glätten kann, umfasst einen Windenergiegenerator und ein Laserflugzeug, das an dem Windenergiegenerator montiert oder in der Nähe des Windenergiegenerators angeordnet ist. Richtung und Geschwindigkeit eines Windes, der in Richtung des Windkraftgenerators bläst, werden im Voraus unter Verwendung des Laser-Flugzeugs beobachtet, und ein Gierwinkel und/oder ein Nickwinkel des Windkraftgenerators werden basierend auf den Beobachtungsergebnissen vorhergesagt und gesteuert. Somit wird eine hocheffiziente Betriebssteuerung des Windenergieerzeugungssystems einschließlich des Windenergiegenerators ausgeführt. Eine mit dem Windkraftgenerator verbundene Ausgabeglättungsvorrichtung ist angeordnet, um die Eingangs-/Ausgabemenge der elektrischen Leistung der Ausgabeglättungsvorrichtung basierend auf einem vorhergesagten Ausgabewert des Windkraftgenerators und einer glatten Ausgabe des gesamten Windenergieerzeugungssystems vorherzusagen und zu steuern.

DE 10 2012 019663 A1 betrifft eine Vorrichtung zur Bestimmung von Windfeldparametern, mit einer Lidar-Messeinrichtung, die dafür eingerichtet ist, eine Windgeschwindigkeit an wenigstens zwei Messpunkten durch Abtasten mit wenigstens einem Laserstrahl zu bestimmen, wobei die Vorrichtung eine Ablenkeinrichtung aufweist, die dafür eingerichtet ist, den wenigstens einen Laserstrahl gegenüber einer Axialrichtung variabel abzulenken, so dass durch den wenigstens einen Laserstrahl die wenigstens zwei Messpunkte in unterschiedlichen Abständen zu einer senkrecht zu der Axialrichtung verlaufenden Ebene abtastbar sind. Ein entsprechendes Verfahren ist ebenfalls Gegenstand der Erfindung.

Es ist daher eine Aufgabe der vorliegenden Erfindung, ein Verfahren zur Bestimmung einer Windrichtung an einer Windenergieanlage, ein System zur Bestimmung einer Windrichtung an einer Windenergieanlage und eine Windenergieanlage bereitzustellen, die einen oder mehrere der genannten Nachteile vermindern oder beseitigen. Insbesondere ist es eine Aufgabe der Erfindung, eine Lösung bereitzustellen, die eine bessere Ausrichtung des Rotors einer Windenergieanlage nach Luv ermöglicht.

Gemäß einem ersten Aspekt wird die eingangs genannte Aufgabe gelöst durch ein Verfahren zur Bestimmung einer Windrichtung an einer Windenergieanlage mit einem Rotor, an dem wenigstens ein Rotorblatt angeordnet ist, umfassend die Schritte: Messen von ersten Windgeschwindigkeiten in einer vordefinierten ersten Messrichtung und von zweiten Windgeschwindigkeiten in einer von der ersten Messrichtung verschiedenen, vordefinierten zweiten Messrichtung jeweils mit einer Messfrequenz an einer Messstelle für einen Messzeitraum, wobei der Messzeitraum durch einen Rotationsweg des Rotors oder durch eine vorbestimmte Zeit definiert wird, wobei das Rotorblatt oder eines der Rotorblätter im Messzeitraum die Messstelle passiert, und Ermitteln einer Windrichtung durch vektorielle Auswertung der ersten Windgeschwindigkeiten und der zweiten Windgeschwindigkeiten, wobei die vektorielle Auswertung der ersten Windgeschwindigkeiten und der zweiten Windgeschwindigkeiten ein Ermitteln einer ersten Durchschnittswindgeschwindigkeit durch Mittelung der ersten Windgeschwindigkeiten und einer zweiten Durchschnittswindgeschwindigkeit durch Mittelung der zweiten Windgeschwindigkeiten umfasst, wobei die Windrichtung durch vektorielle Auswertung der ersten Durchschnittswindgeschwindigkeit und der zweiten Durchschnittswindgeschwindigkeit erfolgt.

Die Windenergieanlage umfasst vorzugsweise einen Turm, an dem der Rotor rotatorisch angeordnet ist, wobei sich der Rotor vorzugsweise einerseits um eine im Wesentlichen horizontale Achse drehen kann und andererseits um eine vertikale Achse. Der Rotor weist das wenigstens eine Rotorblatt auf. Vorzugsweise weist der Rotor zwei, drei oder mehr Rotorblätter auf.

Die ersten Windgeschwindigkeiten werden in der vordefinierten ersten Messrichtung mit einer Messfrequenz gemessen. Die ersten Windgeschwindigkeiten werden vorzugsweise mit einem zeitlichen Abstand gemessen. Beispielsweise können diese alle 100 Millisekunden gemessen werden, wobei eine höhere Messfrequenz eine höhere Genauigkeit zur Folge hat. Eine erste Windgeschwindigkeit zeichnet sich insbesondere dadurch aus, dass diese in der vordefinierten ersten Messrichtung gemessen wurde. Analog hierzu werden die zweiten Windgeschwindigkeiten in der zweiten Messrichtung gemessen. Vorzugsweise werden jeweils eine erste Windgeschwindigkeit und eine zweite Windgeschwindigkeit paarweise erfasst. Dies kann beispielsweise mit einem zweidimensionalen Anemometer erfolgen.

Das Messen der ersten Windgeschwindigkeiten in der vordefinierten ersten Messrichtung erfolgt vorzugsweise derart, dass eine Vielzahl an Messwerten, die jeweils eine der ersten Windgeschwindigkeiten repräsentieren, ermittelt werden. Das Messen der zweiten Windgeschwindigkeiten in der vordefinierten zweiten Messrichtung erfolgt vorzugsweise derart, dass eine Vielzahl an Messwerten, die jeweils eine der zweiten Windgeschwindigkeiten repräsentieren, ermittelt werden.

Die ersten und zweiten Windgeschwindigkeiten werden gemessen und vorzugsweise werden Daten erzeugt, die die ersten und zweiten Windgeschwindigkeiten und/oder die Messwerte der ersten und zweiten Windgeschwindigkeiten repräsentieren. Diese Daten können weiterverarbeitet werden.

Die vektorielle Auswertung der ersten Windgeschwindigkeiten und der zweiten Windgeschwindigkeiten hat die Wirkung, dass die Vektoren zu Messzeitpunkten, die während des Durchgangs des Rotorblattes vor der Messanordnung, beispielsweise einem Anemometer, erlangt werden, bei der Auswertung weniger Einfluss auf das Ergebnis erhalten. Während des Durchgangs des Rotorblattes sind üblicherweise niedrigere Windgeschwindigkeiten vorherrschend, so dass diese bei einer vektoriellen Auswertung weniger Ausschlag geben.

Die Wahl des Messzeitraumes hat den besonderen Vorteil, dass die Messung einen reproduzierbaren bzw. definierten Fehler enthält, da je Messzeitraum genau ein Rotorblatt die Messstelle passiert. Ein solcher reproduzierbarer bzw. definierter Fehler ist vorteilhaft, da er korrigierbar ist.

Die vordefinierte erste Messrichtung und die vordefinierte zweite Messrichtung unterscheiden sich voneinander. Vorzugsweise spannen sowohl die vordefinierte erste Messrichtung als auch die vordefinierte zweite Messrichtung einen Winkel mit einer Achse des Rotors der Windkraftanlage auf, wobei die Achse des Rotors im Allgemeinen in der horizontalen Ebene liegt. Anders ausgedrückt ist weder die erste Messrichtung noch die vordefinierte zweite Messrichtung parallel zur Achse des Rotors. Die vordefinierte erste Messrichtung und die vordefinierte zweite Messrichtung können in der horizontalen Ebene liegen oder einen Winkel mit der horizontalen Ebene überspannen. Vorzugsweise überschreitet der Winkel zwischen der vordefinierten ersten oder zweiten Messrichtung und der Achse des Rotors einen vordefinierten Mindestwinkel von 30 °.

In einer Ausführungsform sind sowohl die vordefinierte erste Messrichtung als auch die vordefinierte zweite Messrichtung symmetrisch in Bezug auf die Achse des Rotors angeordnet. Weiter bevorzugt ist in dieser Ausführungsform die vordefinierte erste Messrichtung orthogonal zur vordefinierten zweiten Messrichtung.

In einer Ausführung weist das Verfahren weiter ein Ermitteln von Windvektoren aus ersten Windgeschwindigkeiten und zweiten Windgeschwindigkeiten für den Messzeitraum auf, wobei die Ermittlung der Windrichtung durch vektorielle Auswertung der Windvektoren erfolgt. Die Windvektoren werden vorzugsweise ausgehend von je einer ersten Windgeschwindigkeit und einer zweiten Windgeschwindigkeit gebildet. Vorzugsweise sind die Messzeitpunkte der ersten Windgeschwindigkeit und der zweiten Windgeschwindigkeit, die den Windvektor bilden, im Rahmen der Messauflösung identisch, gehören also zusammen. Demnach entsteht in dem Messzeitraum eine Reihe oder Liste von Windvektoren, die dann zur Ermittlung der Windrichtung beispielsweise gemittelt werden können.

Die Messstelle ist rotornah angeordnet. Dies bedeutet beispielsweise, dass die Messstelle auf einer Gondel der Windenergieanlage angeordnet ist. Vorzugsweise ist die Messstelle in Windrichtung hinter, also in Lee, vom Rotor angeordnet.

Durch Mittelung der ersten Windgeschwindigkeiten wird eine erste Durchschnittswindgeschwindigkeit ermittelt. Die erste Durchschnittswindgeschwindigkeit repräsentiert einen Mittelwert der ersten Windgeschwindigkeiten in der ersten Messrichtung. Die erste Durchschnittswindgeschwindigkeit kann beispielsweise ein arithmetischer Mittelwert oder ein harmonischer Mittelwert sein. Darüber hinaus wird durch Mittelung der zweiten Windgeschwindigkeiten eine zweite Durchschnittswindgeschwindigkeit ermittelt. Die zweite Durchschnittswindgeschwindigkeit repräsentiert einen Mittelwert der zweiten Windgeschwindigkeiten in der zweiten Messrichtung. Die zweite Durchschnittswindgeschwindigkeit kann beispielsweise ein arithmetischer Mittelwert oder ein harmonischer Mittelwert sein. Die erste Durchschnittswindgeschwindigkeit gilt für die erste Messrichtung. Die zweite Durchschnittswindgeschwindigkeit gilt für die zweite Messrichtung. Vorzugsweise werden Daten erzeugt, die die erste und die zweite Durchschnittswindgeschwindigkeit repräsentiert.

Für die Ermittlung der ersten und zweiten Durchschnittswindgeschwindigkeiten werden die ersten und zweiten Windgeschwindigkeiten genutzt, die innerhalb des Messzeitraums gemessen wurden. Wenn der Messzeitraum beispielsweise 6 Sekunden beträgt, und die Messfrequenz 10 Hz beträgt, bzw. alle 100 Millisekunden eine Windgeschwindigkeit gemessen wird, werden zur Ermittlung der ersten und zweiten Durchschnittswindgeschwindigkeit jeweils sechzig Werte von ersten und zweiten Windgeschwindigkeiten genutzt.

Der Messzeitraum wird beispielsweise durch einen Rotationsweg des Rotors definiert. Dies kann beispielsweise 120° sein. Darüber hinaus kann der Messzeitraum durch eine vorbestimmte Zeit definiert sein, beispielsweise 6 Sekunden. Entscheidend für die Wahl des Messzeitraums ist es, dass während dieser Zeit das Rotorblatt oder eines der Rotorblätter im Messzeitraum die Messstelle passiert. Das bedeutet insbesondere, dass im Messzeitraum mindestens ein Blattdurchgang an der Messstelle erfolgt. Nur durch die Berücksichtigung auch eines Blattdurchganges, kann ein vollständiges Bild der Windverhältnisse an der Messstelle ermittelt werden. Das Auslassen eines Blattdurchgangs kann dieses Bild verfälschen und in einer unzulänglichen Betriebsführung resultieren.

Durch vektorielle Auswertung der ersten Durchschnittswindgeschwindigkeit und der zweiten Durchschnittswindgeschwindigkeit wird eine Windrichtung ermittelt. Die Richtung der ersten Durchschnittswindgeschwindigkeit und der zweiten Durchschnittswindgeschwindigkeit ist durch die erste Messrichtung und die zweite Messrichtung vorgegeben. Aufgrund dessen kann durch Berücksichtigung der Durchschnittswindgeschwindigkeiten die Windrichtung beispielsweise durch den Satz des Pythagoras ermittelt werden.

Der Erfindung liegt die Erkenntnis zugrunde, dass die im Stand der Technik bekannte skalare Ermittlung der Windrichtung nicht ausreichend ist, insbesondere fehleranfällig ist. Darüber hinaus ist die bekannte skalare Ermittlung der Windrichtung nicht ausreichend präzise. Durch die Bestimmung von Windgeschwindigkeiten in zwei vorgegebenen Messrichtungen und die darauffolgende Ermittlung von Durchschnittswindgeschwindigkeiten aus denen die Windrichtung ermittelt wird, entsteht ein robustes und genaues Verfahren zur Bestimmung der Windrichtung an einer Windenergieanlage. Dies wird insbesondere unter Berücksichtigung der Tatsache deutlich, dass die Windgeschwindigkeit an einer Messstelle einer Windenergieanlage üblicherweise um 10 % bis 40 % schwankt.

Darüber hinaus schwankt auch die anliegende Windrichtung stets. Aufgrund dessen kann eine Windenergieanlage mit dem Verfahren zur Bestimmung einer Windrichtung mit einem höheren Wirkungsgrad und somit mit einer höheren Leistung, insbesondere im Teillastbereich, betrieben werden. Darüber hinaus ist die Lebensdauer der Windenergieanlage verbessert, da die Anlagenlasten eine geringere Abweichung von den Auslegungslasten aufweisen.

In einer bevorzugten Ausführungsvariante des Verfahrens ist vorgesehen, dass die Messstelle an einer Gondel der Windenergieanlage angeordnet ist, wobei sich die Messstelle vorzugsweise auf einem in vertikaler Richtung oberen Abschnitt der Gondel befindet und ferner vorzugsweise die Messstelle im Wesentlichen unbeweglich an der Gondel angeordnet ist.

Vorzugsweise befindet sich die Messstelle im Betrieb der Windenergieanlage in Lee vom Rotor. Vorzugsweise ist die Messstelle an einem höchsten Punkt der Gondel angeordnet.

Eine weitere bevorzugte Ausführungsvariante des Verfahren zeichnet sich dadurch aus, dass die ersten Windgeschwindigkeiten und die zweiten Windgeschwindigkeiten mit einem zweidimensionalen Anemometer, insbesondere mit einem digitalen Ultraschallanemometer, gemessen werden.

Das zweidimensionale Anemometer ist insbesondere eingerichtet, um die ersten Windgeschwindigkeiten in der ersten Messrichtung zu messen und um die zweiten Windgeschwindigkeiten in der zweiten Messrichtung zu messen. Durch das Messen der ersten Windgeschwindigkeiten und der zweiten Windgeschwindigkeiten mit dem zweidimensionalen Anemometer wird diese Messung in der ersten Messrichtung und der zweiten Messrichtung ermöglicht.

In einer weiteren bevorzugten Ausführungsvariante des Verfahrens ist vorgesehen, dass die erste Messrichtung und die zweite Messrichtung orthogonal zueinander ausgerichtet sind, wobei vorzugsweise die erste Messrichtung und die zweite Messrichtung im Wesentlichen horizontal ausgerichtet sind.

Durch eine orthogonale Ausrichtung der ersten Messrichtung und der zweiten Messrichtung wird die Ermittlung der Windrichtung durch vektorielle Auswertung vereinfacht. Dadurch wird beispielsweise eine erforderliche Rechenleistung zur Durchführung der Ermittlung der Windrichtung geringer. Darüber hinaus kann die Ermittlung der Windrichtung schneller erfolgen.

Im Wesentlichen horizontal bedeutet insbesondere, dass die erste Messrichtung und/oder die zweite Messrichtung von einer Horizontalen weniger als 30°, weniger als 20°, weniger als 10° oder weniger als 5° abweicht.

Darüber hinaus ist es bevorzugt, dass die Messfrequenz für die erste Messrichtung und für die zweite Messrichtung im Wesentlichen gleich ist.

Die Messfrequenz für die erste Messrichtung und für die zweite Messrichtung kann beispielsweise zwischen 0,1 Hz und 100 Hz betragen. Insbesondere ist es bevorzugt, dass die Messfrequenz wenigstens 5 Hz, vorzugsweise wenigstens 10 Hz oder besonders bevorzugt wenigstens 20 Hz beträgt.

In einer weiteren bevorzugten Fortbildung des Verfahrens ist vorgesehen, dass eine der ersten Windgeschwindigkeiten und eine der zweiten Windgeschwindigkeiten jeweils paarweise gemessen werden und/oder im Wesentlichen zeitgleich gemessen werden. Ferner kann es bevorzugt sein, dass zwischen zwei Messungen der ersten Windgeschwindigkeiten höchstens 100 ms, vorzugsweise höchstens 50 ms liegen, und/oder zwischen zwei Messungen der zweiten Windgeschwindigkeiten höchstens 100 ms, vorzugsweise höchstens 50 ms liegen. Eine weitere Fortbildung sieht vor, dass die vorbestimmte Zeit des Messzeitraums weniger als 10 Sekunden, insbesondere weniger als 8 Sekunden, vorzugsweise weniger gleich 6 Sekunden, beträgt. Der maximale Messzeitraum ist damit hinreichend lang, um bei typischen Drehzahlen von Windenergieanlagen wenigstens einen Durchgang eines Rotorblattes zu enthalten.

Eine paarweise Erfassung der ersten und zweiten Windgeschwindigkeiten kann beispielsweise mit einem zweidimensionalen Anemometer erfolgen. An dem Anemometer wirkt der Wind kontinuierlich. Durch die Definition einer Messfrequenz kann die erste Windgeschwindigkeit und die zweite Windgeschwindigkeit paarweise erfasst werden. Beispielsweise kann dies auch erfolgen, indem die erste Windgeschwindigkeit und die zweite Windgeschwindigkeit zeitgleich gemessen werden. Dadurch kann beispielsweise auch ein Windgeschwindigkeitsvektor ermittelt werden, der durch die erste Windgeschwindigkeit und die zweite Windgeschwindigkeit definiert wird.

Vorzugsweise wird der Rotationsweg hier über eine Rotorposition bestimmt, die von einem Sensor, beispielsweise einem Drehzahlsensor zur Bestimmung der Rotordrehzahl, insbesondere permanent bereitgestellt wird. Hierbei ist bekannt, dass derartige Sensoren die Rotorposition beispielsweise relativ zu einer vollständigen Umdrehung, etwa durch Zählen von Strichen oder ähnlichem, bestimmen. Beispielsweise kann damit, je nach Anzahl der bereitgestellten Striche, eine Auflösung von 500 oder mehr Positionen je Umdrehung des Rotors erreicht werden. Alternativ oder zusätzlich ist auch die Bestimmung mittels Inertialsensoren, beispielsweise Kreisel- und Beschleunigungssensoren oder anderen Sensoren vorteilhaft möglich, einschließlich Spannbändern, Magnetbändern oder Pulsoren.

In einer weiteren bevorzugten Fortbildung des Verfahrens ist vorgesehen, dass der Rotationsweg des Rotors zwischen 115° und 125° beträgt.

Der Bereich des Rotationsweges ist derart gewählt, dass jedenfalls ein Blattdurchgang erfasst ist, ohne dass hierfür Korrekturen vorzunehmen sind. Eine größere Genauigkeit ist demnach nicht erforderlich, so dass die Anforderungen an zur Bestimmung eines Rotationsweges des Rotors herangezogene Sensoren niedrig bleiben, insbesondere genügt eine geringe Auflösung der bestimmten oder gemessenen Rotorposition bzw. des Rotationsweges.

Ebenfalls ist die Genauigkeit des betrachteten Rotationsweges durch die zeitliche Auflösung der Messung der Windgeschwindigkeit beschränkt. Beispielsweise kann die Auflösung des Anemometers 10 Hz betragen, so dass pro Sekunde 10 Messungen der Windgeschwindigkeit durchgeführt werden.

In diesem Fall werden sämtliche Messungen des Anemometers, die während des Durchlaufens des Rotationsweges aufgenommen werden, herangezogen. Zur Vereinfachung der Berechnung können beispielsweise nur vollständig in dem letzten Messzeitraum, d.h. dem Durchlaufen des Rotationsweges, liegende Messintervalle herangezogen werden. Wenn beispielsweise 7,6 Messungen in den Messzeitraum fallen, können dann lediglich die letzten 7 Messungen herangezogen werden. Auch kann alternativ auf die nächste ganze Zahl gerundet, was in dem Beispiel das Heranziehen von 8 Messungen bedeutet, oder ein anteiliges Heranziehen der teilweise in den Messzeitraum fallenden Werte erfolgen, beispielsweise könnte der achtälteste Messwert mit einer Gewichtung von 0,6 herangezogen werden.

In einer besonders bevorzugten Fortbildung des Verfahrens ist vorgesehen, dass dieses den Schritt umfasst: Korrektur der Windrichtung in Abhängigkeit eines eingestellten Pitchwinkels und/oder einer sich einstellenden Schnelllaufzahl.

Der Pitchwinkel beschreibt insbesondere einen Winkel zwischen einer Sehne des Rotorblatts und der Windeinfallsrichtung. Der Pitchwinkel ist üblicherweise mittels eines Pitchantriebs verstellbar. Mittels des Pitchantriebs kann das Rotorblatt um die Rotorblattlängsachse rotatorisch bewegt werden. Durch die rotatorische Bewegung des Rotors um seine Rotorblattlängsachse wird der Pitchwinkel verstellt.

Die Schnelllaufzahl ist definiert als das Verhältnis einer Umfangsgeschwindigkeit der Blattspitze zur Windgeschwindigkeit weit vor der Rotorebene. Die Schnelllaufzahl kann bei Windenergieanlagen mit drei Rotorblättern der Mega- und Multimegawattklasse im Auslegungsbetriebspunkt beispielsweise 6 bis 9 betragen.

Das Ziel der Erfindung zur Bestimmung der Windrichtung ist das Erhalten eines glatten Ergebnisses, also einer Windrichtung mit reproduzierbaren Ergebnissen. Nachdem das erfindungsgemäße Verfahren je einen Blattdurchgang je Messintervall enthält, ist ein durch den Blattdurchgang hervorgerufener Fehler vorhanden. Im Gegensatz zu alternativen Verfahren, die beispielsweise die Messwerte des Blattdurchgangs verwerfen, ist der erfindungsgemäß vorhandene Fehler jedoch reproduzierbar und damit korrigierbar.

Vorzugsweise wird eine von einer Schnelllaufzahl und/oder einem Pitchwinkel abhängige Korrektur der Windrichtung vorgenommen. Hierzu wird besonders bevorzugt eine Korrektur, die von der Schnelllaufzahl und/oder dem Pitchwinkel abhängt, in Form einer Funktion oder Tabelle in der Windenergieanlage hinterlegt.

Während der Pitchwinkel direkt messbar ist, kann die Schnelllaufzahl beispielsweise in Abhängigkeit von Luftdichte, Windgeschwindigkeit und Drehzahl bestimmt werden. Hierfür ist es, alternativ zu einer gemessenen Windgeschwindigkeit, möglich und vorteilhaft, die Windgeschwindigkeit in bekannter Weise aus eine Betriebspunkt der Windenergieanlage mittels eines Windschätzers zu berechnen.

In einer weiteren bevorzugten Ausführungsvariante des Verfahrens ist vorgesehen, dass ein die Windrichtung charakterisierendes Windrichtungssignal erzeugt wird, und das Verfahren umfassend den Schritt: Gewichtung des Windrichtungssignals mit einem Gewichtungsfaktor.

Vorzugsweise erzeugt das Anemometer, insbesondere zweidimensionale Anemometer, das die Windrichtung charakterisierende Windrichtungssignal. Die Gewichtung des Windrichtungssignals mit einem Gewichtungsfaktor kann beispielsweise in Abhängigkeit von der Rotorposition erfolgen. Beispielsweise kann während eines Blattdurchlaufs an der Messstelle ein spezifischer Gewichtungsfaktor für die zu diesem Zeitpunkt gemessenen ersten und zweiten Windgeschwindigkeiten genutzt werden. Ein besonderer Vorteil der vektoriellen Auswertung ist, dass der induzierte Fehler bei den niedrigeren Geschwindigkeiten, die während des Blattdurchgangs vorherrschen, nicht so stark beeinflusst ist, wie es bei skalaren Auswertungen der Fall ist. So sind tendenziell deutlich niedrigere Windgeschwindigkeiten und damit kürzere Vektoren bei dem Blattdurchgang anzutreffen, die auf eine Vektoraddition entsprechend wenig Einfluss haben. Wird das Windrichtungssignal mit einem Gewichtungsfaktor beaufschlagt, kann dieses Verhalten weiter verstärkt werden.

In einer weiteren bevorzugten Fortbildung des Verfahrens ist vorgesehen, dass dieses den Schritt umfasst: Ermitteln einer gemittelten Durchschnittswindgeschwindigkeit durch skalare Auswertung der ersten Windgeschwindigkeiten und der zweiten Windgeschwindigkeiten. Demnach ist es besonders vorteilhaft, die Durchschnittswindgeschwindigkeit mit einem skalaren Verfahren zu ermitteln, insbesondere im Unterschied zu der Windrichtung. Damit wird dem Umstand Rechnung getragen, dass eine vektorielle Mittelung der Windgeschwindigkeit sonst bei unterschiedlichen Windrichtungen einen zu geringen Wert der Durchschnittswindgeschwindigkeit ergibt, obwohl tatsächlich viel Wind herrscht.

Eine weitere bevorzugte Ausführungsvariante des Verfahrens sieht vor, dass die Windenergieanlage einen Inkrementalgeber zur Erfassung der Rotorposition aufweist, und vorzugsweise ein Ausgangssignal des Inkrementalgebers eine Messung der ersten Windgeschwindigkeit und der zweiten Windgeschwindigkeit auslöst.

Beispielsweise können 500 Inkremente je 360° Rotorumlauf vorgesehen sein. Vorzugsweise löst ein Ausgangssignal des Inkrementalgebers die Messung der ersten und der zweiten Windgeschwindigkeit aus. Bei geringen Rotationsgeschwindigkeiten kann hingegen auch eine weitere Einheit die Messung der ersten Windgeschwindigkeit und der zweiten Windgeschwindigkeit auslösen. Diese weitere Einheit kann beispielsweise zeitgebunden sein.

In einer weiteren bevorzugten Ausführungsvariante des Verfahrens ist vorgesehen, dass die Ermittlung der Windrichtung in vordefinierten Zeitabständen erfolgt, beispielsweise mit einem zeitlichen Abstand von 1 Sekunde, und für die Ermittlung der Windrichtung eine vorbestimmte Anzahl an Messwerten berücksichtigt wird, wobei die Messwerte jeweils eine der ersten Windgeschwindigkeiten und eine der zweiten Windgeschwindigkeiten repräsentieren.

Die vorbestimmte Anzahl von ersten Windgeschwindigkeiten und zweiten Windgeschwindigkeiten kann beispielsweise zwischen 30 und 90, insbesondere zwischen 50 und 70, besonders bevorzugt 60, betragen. Der zeitliche Abstand kann auch weniger als eine Sekunde betragen, beispielsweise 100 ms.

Gemäß einem weiteren Aspekt wird die eingangs genannte Aufgabe gelöst durch ein System zur Bestimmung einer Windrichtung an einer Windenergieanlage mit einem Rotor, an dem wenigstens ein Rotorblatt angeordnet ist, umfassend eine an einer Messstelle angeordnete Winderfassungseinheit, die eingerichtet ist, zum Messen von ersten Windgeschwindigkeiten in einer vordefinierten ersten Messrichtung und von zweiten Windgeschwindigkeiten in einer von der ersten Messrichtung verschiedenen, vordefinierten zweiten Messrichtung jeweils mit einer Messfrequenz, eine mit der Winderfassungseinheit gekoppelte Steuerungsvorrichtung, die eingerichtet ist, erste Windgeschwindigkeiten und zweite Windgeschwindigkeiten für einen Messzeitraum zu messen, wobei der Messzeitraum durch einen Rotationsweg des Rotors oder durch eine vorbestimmte Zeit definiert ist, wobei der Messzeitraum derart gewählt ist, dass das Rotorblatt oder eines der Rotorblätter im Messzeitraum die Messstelle passiert, und eine Windrichtung durch vektorielle Auswertung der ersten Windgeschwindigkeiten und der zweiten Windgeschwindigkeiten zu ermitteln, wobei die Steuerungsvorrichtung eingerichtet ist, eine erste Durchschnittswindgeschwindigkeit durch Mittelung der ersten Windgeschwindigkeiten und eine zweite Durchschnittswindgeschwindigkeit durch Mittelung der zweiten Windgeschwindigkeiten zu ermitteln und die Windrichtung durch vektorielle Auswertung der ersten Durchschnittswindgeschwindigkeit und der zweiten Durchschnittswindgeschwindigkeit zu ermitteln.

Vorzugsweise kann das System mit sämtlichen der im Zusammenhang mit dem Verfahren beschriebenen besonderen und bevorzugten Ausgestaltungen kombiniert werden. Die Winderfassungseinheit ist an der Messstelle angeordnet. Die Winderfassungseinheit kann beispielsweise als Anemometer, insbesondere als zweidimensionales Anemometer, besonders bevorzugt als digitales Ultraschallanemometer, ausgebildet sein. Die Mittelung kann auch mit den im Vorherigen bereits erläuterten Gewichtungsfaktoren erfolgen.

Gemäß einem weiteren Aspekt wird die eingangs genannte Aufgabe gelöst durch eine Windenergieanlage, die eingerichtet ist, ein Verfahren nach einem der im Vorherigen beschriebenen Ausführungsvarianten auszuführen, und/oder umfassend ein System nach dem vorherigen Aspekt.

Für weitere Vorteile, Ausführungsvarianten und Ausführungsdetails der weiteren Aspekte und ihrer möglichen Fortbildungen wird auch auf die zuvor erfolgte Beschreibung zu den entsprechenden Merkmalen und Fortbildungen des Verfahrens zur Bestimmung einer Windrichtung an einer Windenergieanlage verwiesen.

Bevorzugte Ausführungsbeispiele werden exemplarisch anhand der beiliegenden Figuren erläutert. Es zeigen:
- Figur 1:: eine schematische, dreidimensionale Ansicht einer beispielhaften Ausführungsform einer Windenergieanlage;
- Figur 2:: eine schematische Ansicht einer beispielhaften Ausführungsform einer Winderfassungseinheit;
- Figur 3:: schematische Ansichten der in Figur 2 gezeigten Winderfassungseinheit mit unterschiedlichen Windgeschwindigkeiten;
- Figur 4:: eine schematische Ansicht von beispielhaften Messungen von ersten und zweiten Windgeschwindigkeiten;
- Figur 5:: eine schematische Ansicht der in Figur 2 gezeigten Winderfassungseinheit mit einer ersten Durchschnittswindgeschwindigkeit und einer zweiten Durchschnittswindgeschwindigkeit sowie der daraus sich ergebenden Windrichtung;
- Figur 6:: ein beispielhaftes Diagramm von über den Rotordrehwinkel aufgetragenen ersten und zweiten Windgeschwindigkeiten und einer Windrichtung; und
- Figur 7:: ein schematisches Verfahren.

In den Figuren sind gleiche oder im Wesentlichen funktionsgleiche bzw. -ähnliche Elemente mit den gleichen Bezugszeichen bezeichnet.

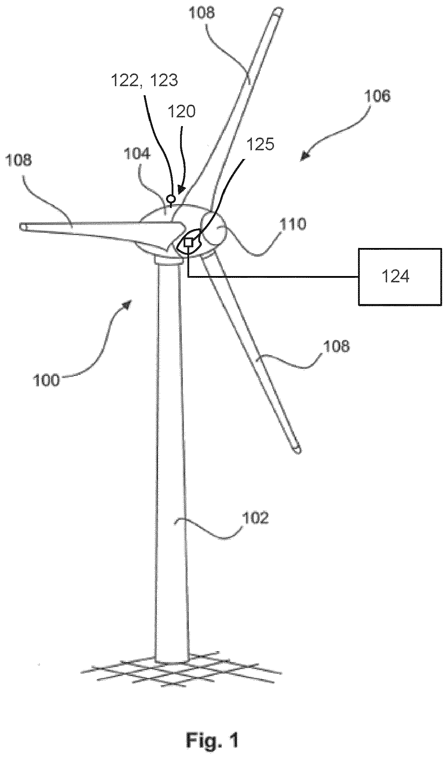

Figur 1 zeigt eine schematische, dreidimensionale Ansicht einer Windenergieanlage 100. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage 100 durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie.

Die Windenergieanlage 100 umfasst ein System 120 zur Bestimmung einer Windrichtung. Das System 120 umfasst eine Winderfassungseinheit 122, die an einer Messstelle 123 angeordnet ist. Die Messstelle 123 bzw. die Winderfassungseinheit 122 ist an der Gondel 104 angeordnet. Insbesondere befindet sich die Messstelle 123 bzw. die Winderfassungseinheit 122 auf einem in vertikaler Richtung oberen Abschnitt der Gondel 104. Die Winderfassungseinheit 122 ist im Wesentlichen unbeweglich an der Gondel 104 angeordnet. Die Winderfassungseinheit 122 ist eingerichtet zum Messen von ersten Windgeschwindigkeiten in einer vordefinierten ersten Messrichtung und von zweiten Windgeschwindigkeiten in einer von der ersten Messrichtung verschiedenen, vordefinierten zweiten Messrichtung. Die ersten Windgeschwindigkeiten und die zweiten Windgeschwindigkeiten werden mit der Winderfassungseinheit 122 jeweils mit einer Messfrequenz gemessen.

Das System 120 umfasst ferner eine Steuerungsvorrichtung 124. Die Steuerungsvorrichtung 124 ist eingerichtet erste Windgeschwindigkeiten und zweite Windgeschwindigkeiten für einen Messzeitraum zu erlangen, wobei der Messzeitraum durch einen Rotationsweg des Rotors 106 oder durch eine vorbestimmte Zeit definiert ist, wobei der Messzeitraum derart gewählt ist, dass das Rotorblatt 108 oder eines der Rotorblätter 108 im Messzeitraum die Messstelle 123 passiert, im vorliegenden Fall also eines der Rotorblätter die 0°-Position passiert bzw. quert. Ferner ist die Steuerungseinrichtung 124 eingerichtet, um eine Windrichtung durch vektorielle Auswertung der ersten Durchschnittswindgeschwindigkeit und der zweiten Durchschnittswindgeschwindigkeit zu ermitteln.

Ferner umfasst die Windenergieanlage einen Inkrementalgeber 125, der auch vom System 120 umfasst sein kann. Vorzugsweise löst ein Ausgangssignal des Inkrementalgebers 125 die Bestimmung des Rotationsweges und damit Beginn und Ende des Messzeitraumes aus. Die Messung der ersten und der zweiten Windgeschwindigkeit durch die Winderfassungseinheit 122 kann synchron mit dem Ausgangssignal des Inkrementalgebers 125 oder unabhängig davon, beispielsweise in einen Pufferspeicher, erfolgen.

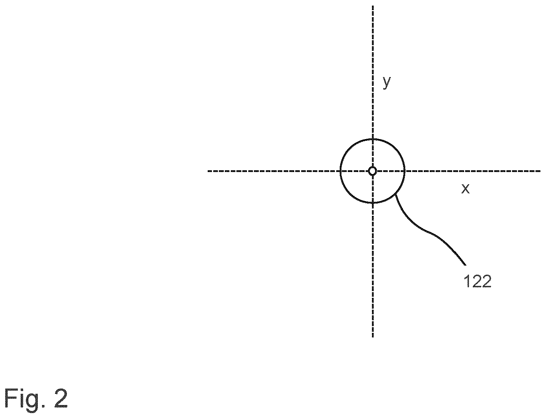

Figur 2 zeigt eine schematische Ansicht einer beispielhaften Ausführungsform einer Winderfassungseinheit 122. Die Winderfassungseinheit 122 weist eine erste Messrichtung x und eine zweite Messrichtung y auf. Die Winderfassungseinheit 122 misst eine Windgeschwindigkeit in der ersten Messrichtung x und in der zweiten Messrichtung y. Vorzugsweise ist die Winderfassungseinheit 122 derart eingerichtet, dass diese im Wesentlichen keine Windgeschwindigkeit in einer Messrichtung misst, die von der ersten Messrichtung x und/oder von der zweiten Messrichtung y abweicht.

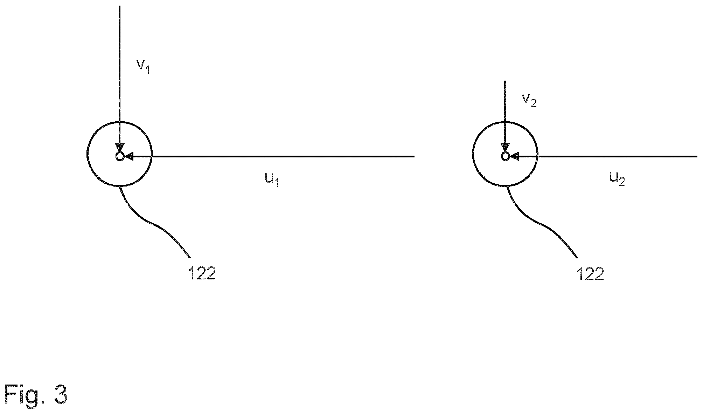

Figur 3 zeigt schematische Ansichten der in Figur 2 gezeigten Winderfassungseinheit 122 mit unterschiedlichen Windgeschwindigkeiten u₁,u₂ ,v₁ ,v₂. In Figur 3 sind insbesondere zwei unterschiedliche Zustände gezeigt, in denen unterschiedliche Windgeschwindigkeiten mit der Winderfassungseinheit 122 gemessen werden. In dem links im Bild gezeigten Zustand ist eine erste Windgeschwindigkeit u₁ in erster Messrichtung x gezeigt. Ferner ist hier gezeigt, dass eine zweite Windgeschwindigkeit v₁ in zweiter Messrichtung y an der Winderfassungseinheit 122 vorliegt. Rechts im Bild ist für einen anderen Zeitpunkt mit einer geringeren Windgeschwindigkeit der Zustand dargestellt. Es ist ersichtlich, dass die erste Windgeschwindigkeit u₂ in erster Messrichtung x und die zweite Windgeschwindigkeit v₂ in zweiter Messrichtung y geringer ausfallen als im links im Bild gezeigten Zustand. Sollte der Wind exakt aus der Messrichtung x wehen, würde der Wert uₓ die Windgeschwindigkeit dieses Windes annehmen und der Wert v_{y} würde null betragen.

Für die Bestimmung einer im Folgenden noch näher erläuterten ersten und zweiten Durchschnittswindgeschwindigkeit werden eine Vielzahl von ersten Windgeschwindigkeit U und zweiten Windgeschwindigkeiten V berücksichtigt.

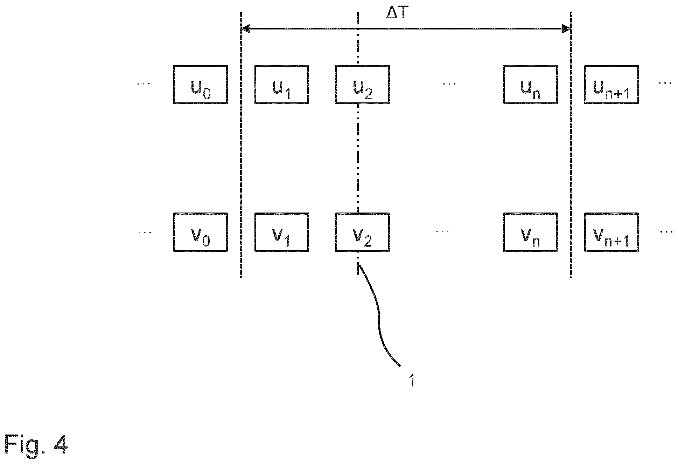

Figur 4 zeigt eine schematische Ansicht von beispielhaften Messungen von ersten und zweiten Windgeschwindigkeiten. Dieses Prinzip zur Ermittlung der Durchschnittswindgeschwindigkeiten ist hier in der Figur 4 abgebildet. Die Winderfassungseinheit 122 misst vorzugsweise in kontinuierlichen Abständen die ersten Windgeschwindigkeiten u_{X} in erster Messrichtung x und die zweiten Windgeschwindigkeiten v_{y} in zweiter Messrichtung y.

Um eine erste Durchschnittswindgeschwindigkeit zu ermitteln, wird ein Messzeitraum Δ*T* definiert. Die in dem Messzeitraum ΔT liegenden Messwerte u₁ bis uₙ werden beispielsweise für die erste Windgeschwindigkeit u_{X} in erster Messrichtung x gemittelt. Hierfür können diese beispielsweise aufaddiert werden und durch die Anzahl der berücksichtigten Messwerte dividiert werden, um einen arithmetischen Mittelwert zu erhalten. Analog erfolgt dies mit den Messwerten der Windgeschwindigkeiten V₁ bis v_{N} in zweiter Messrichtung y. Entscheidend hierbei ist, dass im Messzeitraum ΔT ein Blattdurchgang an der Messstelle 123 erfolgte, sodass im Messzeitraum ΔT das Rotorblatt 108 oder eines der Rotorblätter 108 die Messstelle 123 passiert.

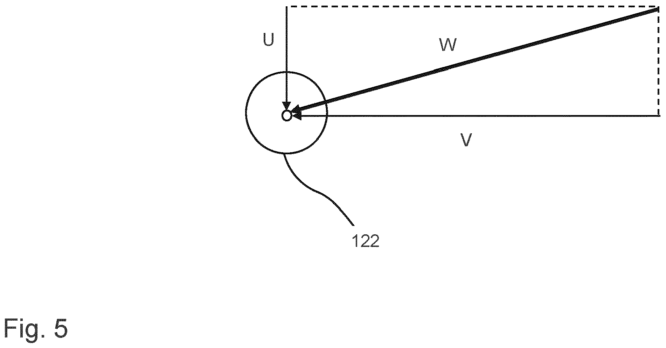

Figur 5 zeigt eine schematische Ansicht der in Figur 2 gezeigten Winderfassungseinheit 122 mit einer ersten Durchschnittswindgeschwindigkeit U und einer zweiten Durchschnittswindgeschwindigkeit V sowie der daraus sich ergebenden Windrichtung W. Durch die Mittelung der ersten Windgeschwindigkeiten u_{X} kann die erste Durchschnittswindgeschwindigkeit V ermittelt werden. Analog hierzu kann die zweite Durchschnittswindgeschwindigkeit U durch Mittelung der zweiten Windgeschwindigkeiten v_{Y} ermittelt werden. Durch den Wert der ersten Durchschnittswindgeschwindigkeit und den Wert der zweiten Durchschnittswindgeschwindigkeit sowie der Kenntnis des Winkels zwischen der ersten Messrichtung x und der zweiten Messrichtung y kann die Windrichtung W ermittelt werden.

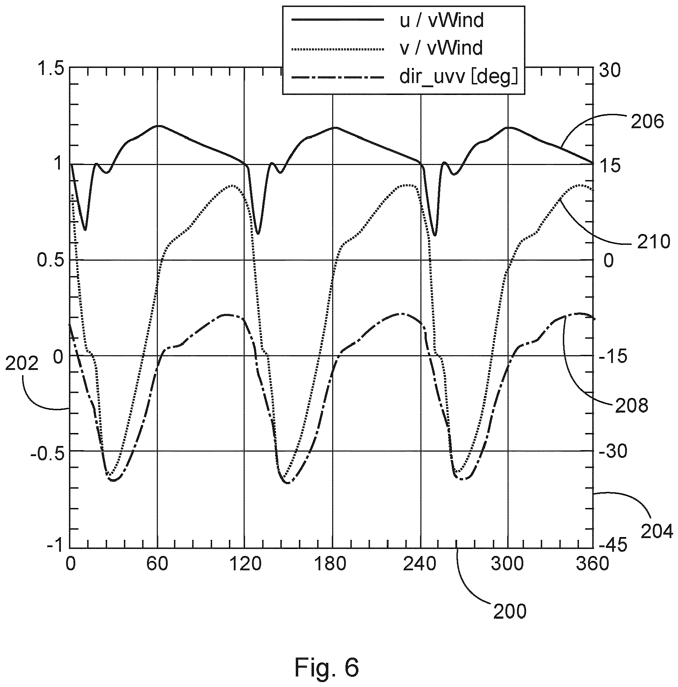

Figur 6 zeigt ein beispielhaftes Diagramm von über den Rotordrehwinkel 200 aufgetragenen ersten und zweiten Windgeschwindigkeiten und einer Windrichtung. Auf der Abszisse ist der Rotordrehwinkel 200 des Rotors 106 aufgetragen. Von einem Referenzpunkt, dem die Nullgradposition zugeordnet ist, dreht sich der Rotor 106 von 0 Grad hin zu 360 Grad. Auf der ersten, links gezeigten Ordinate ist eine Geschwindigkeitsabweichung 202 in Prozent aufgetragen, wobei bei 0 Grad Rotordrehwinkel 200 ein Referenzpunkt bei 0 gesetzt wurde. Auf der zweiten Ordinate, rechts im Diagramm abgebildet, ist eine Windrichtungsabweichung 204 ebenfalls in Prozent dargestellt.

Die Kurve 206 repräsentiert die Windgeschwindigkeitsabweichung in erster Messrichtung x. Die Kurve 208 repräsentiert die Geschwindigkeitsabweichung in zweiter Messrichtung. Die Kurve 210 repräsentiert die Windrichtungsabweichung. Die Messwerte sind auf eine Messstelle 123, insbesondere eine Winderfassungseinheit 122, bezogen. Es ist ersichtlich, dass die ersten und zweiten Windgeschwindigkeiten 206, 208 entlang des Drehwinkels 200 deutlichen Schwankungen unterliegen. Aufgrund dessen ist auch die Windrichtung 210 nicht konstant, sondern verändert sich um bis zu 45° während eines Durchlaufes eines Rotorblattes.

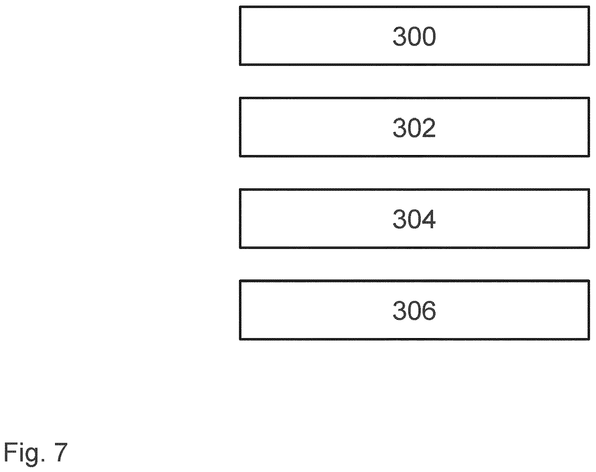

Figur 7 zeigt ein schematisches Verfahren. Im ersten Schritt 300 werden erste Windgeschwindigkeiten uₓ in einer vordefinierten ersten Messrichtung x und eine zweite Windgeschwindigkeit v_{y} in einer von der ersten Messrichtung x verschiedenen, vordefinierten zweiten Messrichtung y jeweils mit einer Messfrequenz an einer Messstelle 123 gemessen. Im Schritt 302 wird eine erste Durchschnittswindgeschwindigkeit U durch Mittelung der ersten Windgeschwindigkeiten uₓ ermittelt.

In Schritt 304 wird eine zweite Durchschnittswindgeschwindigkeit V durch Mittelung der zweiten Windgeschwindigkeiten v_{y} ermittelt. Dies erfolgt für einen Messzeitraum. Der Messzeitraum Δ*T* wird durch einen Rotationsweg des Rotors 106 oder durch eine vorbestimmte Zeit definiert. Während des Messzeitraums ΔT passiert das Rotorblatt 108, oder eines der Rotorblätter 108, die Messstelle 123. In Schritt 306 wird eine Windrichtung W durch vektorielle Auswertung der ersten Durchschnittswindgeschwindigkeit U und der zweiten Durchschnittswindgeschwindigkeit V ermittelt.

### BEZUGSZEICHEN

- 1: Blattdurchgang
- 100: Windenergieanlage
- 102: Turm
- 104: Gondel
- 106: Rotor
- 108: Rotorblätter
- 110: Spinner
- 120: System zur Bestimmung einer Windrichtung
- 122: Winderfassungseinheit
- 123: Messstelle
- 124: Steuerungsvorrichtung
- 125: Inkrementalgeber
- 200: Drehwinkel
- 202: Geschwindigkeitsabweichung in %
- 204: Windrichtung
- 206: Windgeschwindigkeit in erster Messrichtung
- 208: Windgeschwindigkeit in zweiter Messrichtung
- 210: Windrichtung
- U: erste Durchschnittswindgeschwindigkeit
- uₓ: erste Windgeschwindigkeit in erster Messrichtung x
- V: zweite Durchschnittswindgeschwindigkeit
- v_{y}: zweite Windgeschwindigkeit in zweiter Messrichtung y
- W: Windrichtung
- x: erste Messrichtung
- y: zweite Messrichtung
- ΔT: Messzeitraum

## Patentansprüche

1. Verfahren zur Bestimmung einer Windrichtung (W) an einer Windenergieanlage (100) mit einem Rotor (106), an dem wenigstens ein Rotorblatt (108) angeordnet ist, umfassend die Schritte:
- Messen von ersten Windgeschwindigkeiten (uₓ) in einer vordefinierten ersten Messrichtung (x) und von zweiten Windgeschwindigkeiten (v_{y}) in einer von der ersten Messrichtung (x) verschiedenen, vordefinierten zweiten Messrichtung (y) jeweils mit einer Messfrequenz an einer Messstelle (123) für einen Messzeitraum (ΔT), wobei der Messzeitraum (ΔT) durch einen Rotationsweg des Rotors (106) oder durch eine vorbestimmte Zeit definiert wird, wobei das Rotorblatt (108) oder eines der Rotorblätter (108) im Messzeitraum (ΔT) die Messstelle (123) passiert, und
- Ermitteln einer Windrichtung (W) durch vektorielle Auswertung der ersten Windgeschwindigkeiten (uₓ) und der zweiten Windgeschwindigkeiten (vₓ)
**dadurch gekennzeichnet, dass** die vektorielle Auswertung der ersten Windgeschwindigkeiten (uₓ) und der zweiten Windgeschwindigkeiten (v_{y}) ein Ermitteln einer ersten Durchschnittswindgeschwindigkeit (U) durch Mittelung der ersten Windgeschwindigkeiten (uₓ) und einer zweiten Durchschnittswindgeschwindigkeit (V) durch Mittelung der zweiten Windgeschwindigkeiten (v_{y}) umfasst, wobei die Windrichtung (W) durch vektorielle Auswertung der ersten Durchschnittswindgeschwindigkeit (U) und der zweiten Durchschnittswindgeschwindigkeit (V) erfolgt.

2. Verfahren nach Anspruch 1, wobei das Verfahren weiter ein Ermitteln von Windvektoren aus ersten Windgeschwindigkeiten (uₓ) und zweiten Windgeschwindigkeiten (v_{y}) für den Messzeitraum (ΔT) erfolgt, wobei die Ermittlung der Windrichtung (W) durch vektorielle Auswertung der Windvektoren erfolgt.

3. Verfahren nach einem der vorherigen Ansprüche, wobei die Messstelle (123) an einer Gondel der Windenergieanlage (100) angeordnet ist, wobei sich die Messstelle (123) vorzugsweise auf einem in vertikaler Richtung oberen Abschnitt der Gondel befindet und ferner vorzugsweise die Messstelle (123) im Wesentlichen unbeweglich an der Gondel (104) angeordnet ist.

4. Verfahren nach einem der vorherigen Ansprüche, wobei die ersten Windgeschwindigkeiten (uₓ) und die zweiten Windgeschwindigkeiten (v_{y}) mit einem zweidimensionalen Anemometer (122), insbesondere mit einem digitalen Ultraschallanemometer, gemessen werden.

5. Verfahren nach einem der vorherigen Ansprüche, wobei die erste Messrichtung (x) und die zweite Messrichtung (y) orthogonal zueinander ausgerichtet sind, wobei vorzugsweise die erste Messrichtung (x) und die zweite Messrichtung (y) im Wesentlichen horizontal ausgerichtet sind.

6. Verfahren nach einem der vorherigen Ansprüche, wobei die Messfrequenz für die erste Messrichtung (x) und für die zweite Messrichtung (y) im Wesentlichen gleich ist.

7. Verfahren nach einem der vorherigen Ansprüche, wobei
- eine der ersten Windgeschwindigkeiten (uₓ) und eine der zweiten Windgeschwindigkeiten (V_{y}) jeweils paarweise gemessen werden und/oder im Wesentlichen zeitgleich gemessen werden, und/oder
- zwischen zwei Messungen der ersten Windgeschwindigkeiten (uₓ) höchstens 100 ms, vorzugsweise höchstens 50 ms, und/oder zwischen zwei Messungen der zweiten Windgeschwindigkeiten (v_{y}) höchstens 100 ms, vorzugsweise höchstens 50 ms liegen, und/oder
- die vorbestimmte Zeit des Messzeitraums (ΔT) weniger als 10 Sekunden, insbesondere weniger als 8 Sekunden, vorzugsweise weniger gleich 6 Sekunden, beträgt.

8. Verfahren nach einem der vorherigen Ansprüche, wobei der Rotationsweg des Rotors (106) zwischen 115° und 125° beträgt.

9. Verfahren nach einem der vorherigen Ansprüche, umfassend den Schritt: Korrektur der Windrichtung (W) in Abhängigkeit eines eingestellten Pitchwinkels und/oder einer sich einstellenden Schnelllaufzahl.

10. Verfahren nach einem der vorherigen Ansprüche, wobei ein die Windrichtung (W) charakterisierendes Windrichtungssignal erzeugt wird, und das Verfahren umfassend den Schritt: Gewichtung des Windrichtungssignals mit einem Gewichtungsfaktor.

11. Verfahren nach einem der vorherigen Ansprüche, umfassend den Schritt: Ermitteln einer gemittelten Durchschnittswindgeschwindigkeit durch skalare Auswertung der ersten Windgeschwindigkeiten (uₓ) und der zweiten Windgeschwindigkeiten (v_{y}).

12. Verfahren nach einem der vorherigen Ansprüche, wobei die Windenergieanlage (100) einen Inkrementalgeber (125) zur Erfassung der Rotorposition aufweist, und vorzugsweise ein Ausgangssignal des Inkrementalgebers eine Messung der ersten Windgeschwindigkeit (uₓ) und der zweiten Windgeschwindigkeit (v_{y}) auslöst.

13. Verfahren nach einem der vorherigen Ansprüche, wobei die Ermittlung der Windrichtung (W) in vordefinierten Zeitabständen erfolgt, beispielsweise mit einem zeitlichen Abstand von 1 Sekunde, und für die Ermittlung der Windrichtung (W) eine vorbestimmte Anzahl an Messwerten berücksichtigt wird, wobei die Messwerte jeweils eine der ersten Windgeschwindigkeiten und eine der zweiten Windgeschwindigkeiten repräsentieren.

14. System (120) zur Bestimmung einer Windrichtung (W) an einer Windenergieanlage (100) mit einem Rotor (106), an dem wenigstens ein Rotorblatt (108) angeordnet ist, umfassend
- eine an einer Messstelle (123) angeordnete Winderfassungseinheit (122), die eingerichtet ist, zum Messen von ersten Windgeschwindigkeiten (uₓ) in einer vordefinierten ersten Messrichtung (x) und von zweiten Windgeschwindigkeiten (v_{y}) in einer von der ersten Messrichtung (x) verschiedenen, vordefinierten zweiten Messrichtung (y) jeweils mit einer Messfrequenz,
- eine mit der Winderfassungseinheit (122) gekoppelte Steuerungsvorrichtung (124), die eingerichtet ist,
∘ erste Windgeschwindigkeiten (uₓ) und zweite Windgeschwindigkeiten (v_{y}) für einen Messzeitraum (ΔT) zu messen, wobei der Messzeitraum (ΔT) durch einen Rotationsweg des Rotors (106) oder durch eine vorbestimmte Zeit definiert ist, wobei der Messzeitraum (ΔT) derart gewählt ist, dass das Rotorblatt (108) oder eines der Rotorblätter im Messzeitraum (ΔT) die Messstelle (123) passiert, und
∘ eine Windrichtung (W) durch vektorielle Auswertung der ersten Windgeschwindigkeiten (uₓ) und der zweiten Windgeschwindigkeiten (v_{y}) zu ermitteln,
**dadurch gekennzeichnet, dass** die Steuerungsvorrichtung (124) eingerichtet ist, eine erste Durchschnittswindgeschwindigkeit (U) durch Mittelung der ersten Windgeschwindigkeiten (uₓ) und eine zweite Durchschnittswindgeschwindigkeit (V) durch Mittelung der zweiten Windgeschwindigkeiten (v_{y}) zu ermitteln und die Windrichtung (W) durch vektorielle Auswertung der ersten Durchschnittswindgeschwindigkeit (U) und der zweiten Durchschnittswindgeschwindigkeit (V) zu ermitteln.

15. Windenergieanlage (100),
- die eingerichtet ist, ein Verfahren nach einem der Ansprüche 1-13 auszuführen, und/oder
- umfassend ein System (120) nach Anspruch 14.

## Claims

1. Method for ascertaining a wind direction (W) at a wind power installation (100) having a rotor (106) on which at least one rotor blade (108) is arranged, comprising the steps of:
- measuring first wind speeds (uₓ) in a predefined first measuring direction (x) and second wind speeds (v_{y}) in a predefined second measuring direction (y) different from the first measuring direction (x) in each case with a measuring frequency at a measuring point (123) for a measuring period (ΔT), wherein the measuring period (ΔT) is defined by a rotational distance of the rotor (106) or by a prespecified time, wherein the rotor blade (108) or one of the rotor blades (108) passes the measuring point (123) in the measuring period (ΔT), and
- determining a wind direction (W) by vectorial evaluation of the first wind speeds (uₓ) and of the second wind speeds (vₓ),
**characterized by** that the vectorial evaluation of the first wind speeds (uₓ) and of the second wind speeds (v_{y}) comprises determining a first average wind speed (U) by averaging the first wind speeds (uₓ), and a second average wind speed (V) by averaging the second wind speeds (v_{y}), wherein the wind direction (W) is determined by vectorial evaluation of the first average wind speed (U) and of the second average wind speed (V).

2. Method according to Claim 1, wherein the method furthermore comprises determining wind vectors from first wind speeds (uₓ) and second wind speeds (v_{y}) for the measuring period (ΔT), wherein the wind direction (W) is determined by vectorial evaluation of the wind vectors.

3. Method according to one of the preceding claims, wherein the measuring point (123) is arranged on a nacelle of the wind power installation (100), wherein the measuring point (123) is preferably situated on an upper portion of the nacelle in the vertical direction, and, furthermore preferably, the measuring point (123) is arranged substantially immovably on the nacelle (104).

4. Method according to one of the preceding claims, wherein the first wind speeds (uₓ) and the second wind speeds (v_{y}) are measured with a two-dimensional anemometer (122), in particular with a digital ultrasonic anemometer.

5. Method according to one of the preceding claims, wherein the first measuring direction (x) and the second measuring direction (y) are oriented orthogonally with respect to each other, wherein preferably the first measuring direction (x) and the second measuring direction (y) are oriented substantially horizontally.

6. Method according to one of the preceding claims, wherein the measuring frequency for the first measuring direction (x) and for the second measuring direction (y) is substantially identical.

7. Method according to one of the preceding claims, wherein
- one of the first wind speeds (uₓ) and one of the second wind speeds (v_{y}) are in each case measured in pairs and/or are measured substantially isochronously, and/or
- there are at most 100 ms, preferably at most 50 ms, between two measurements of the first wind speeds (uₓ), and/or at most 100 ms, preferably at most 50 ms, between two measurements of the second wind speeds (v_{y}), and/or
- the prespecified time of the measuring period (ΔT) is less than 10 seconds, in particular less than 8 seconds, preferably less than or equal to 6 seconds.

8. Method according to one of the preceding claims, wherein the rotational distance of the rotor (106) is between 115° and 125°.

9. Method according to one of the preceding claims, comprising the step of:
adjusting the wind direction (W) depending on a set pitch angle and/or an arising tip speed ratio.

10. Method according to one of the preceding claims, wherein a wind direction signal characterizing the wind direction (W) is produced, and the method comprising the step of: weighting the wind direction signal with a weighting factor.

11. Method according to one of the preceding claims, comprising the step of: determining an averaged average wind speed by scalar evaluation of the first wind speeds (uₓ) and of the second wind speeds (v_{y}).

12. Method according to one of the preceding claims, wherein the wind power installation (100) has an incremental sensor (125) for sensing the rotor position, and preferably an output signal of the incremental sensor triggers a measurement of the first wind speed (uₓ) and of the second wind speed (v_{y}).

13. Method according to one of the preceding claims, wherein the wind direction (W) is determined at predefined time intervals, for example at a time interval of 1 second, and, for the determination of the wind direction (W), a prespecified number of measurement values is taken into consideration, wherein the measurement values each represent one of the first wind speeds and one of the second wind speeds.

14. System (120) for ascertaining a wind direction (W) at a wind power installation (100) having a rotor (106) on which at least one rotor blade (108) is arranged, comprising
- a wind-sensing unit (122) which is arranged at a measuring point (123) and is configured for measuring first wind speeds (uₓ) in a predefined first measuring direction (x) and second wind speeds (v_{y}) in a predefined second measuring direction (y) different from the first measuring direction (x) in each case with a measuring frequency,
- a control device (124) which is coupled to the wind-sensing unit (122) and is configured
∘ to measure first wind speeds (uₓ) and second wind speeds (v_{y}) for a measuring period (ΔT), wherein the measuring period (ΔT) is defined by a rotational distance of the rotor (106) or by a prespecified time, wherein the measuring period (ΔT) is selected in such a manner that the rotor blade (108) or one of the rotor blades passes the measuring point (123) in the measuring period (ΔT), and
∘ to determine a wind direction (W) by vectorial evaluation of the first wind speeds (uₓ) and the second wind speeds (v_{y}),
**characterized in that** the control device (124) is arranged to determine a first average wind speed (U) by averaging the first wind speeds (uₓ) and a second average wind speed (V) by averaging the second wind speeds (v_{y}), and to determine the wind direction (W) by vectorial evaluation of the first average wind speed (U) and the second average wind speed (V).

15. Wind power installation (100),
- which is configured to carry out a method according to one of Claims 1-13, and/or
- comprising a system (120) according to Claim 14.

## Revendications

1. Procédé pour la détermination d'une direction du vent (W) sur une éolienne (100) avec un rotor (106), sur lequel est disposée au moins une pale de rotor (108), comprenant les étapes :
- de mesure de premières vitesses du vent (uₓ) dans une première direction de mesure (x) prédéfinie et de deuxièmes vitesses du vent (v_{y}) dans une deuxième direction de mesure (y) prédéfinie différente de la première direction de mesure (x) respectivement avec une fréquence de mesure sur un point de mesure (123) pour une période de mesure (ΔT), dans lequel la période de mesure (ΔT) est définie par une course de rotation du rotor (106) ou par un temps prédéfini, dans lequel la pale de rotor (108) ou l'une des pales de rotor (108) passe par le point de mesure (123) dans la période de mesure (ΔT), et
- d'établissement d'une direction du vent (W) par évaluation vectorielle des premières vitesses du vent (uₓ) et des deuxièmes vitesses du vent (v_{y})
**caractérisé en ce que** l'évaluation vectorielle des premières vitesses du vent (uₓ) et des deuxièmes vitesses du vent (v_{y}) comprend un établissement d'une première vitesse du vent moyenne (U) par calcul de la moyenne des premières vitesses du vent (uₓ) et d'une deuxième vitesse du vent moyenne (V) par calcul de la moyenne des deuxièmes vitesses du vent (v_{y}), dans lequel la direction du vent (W) s'effectue par évaluation vectorielle de la première vitesse du vent moyenne (U) et de la deuxième vitesse du vent moyenne (V).

2. Procédé selon la revendication 1, dans lequel le procédé s'effectue en outre un établissement de vecteurs de vent à partir de premières vitesses du vent (uₓ) et deuxièmes vitesses du vent (v_{y}) pour la période de mesure (ΔT), dans lequel l'établissement de la direction du vent (W) s'effectue par évaluation vectorielle des vecteurs de vent.

3. Procédé selon l'une quelconque des revendications précédentes, dans lequel le point de mesure (123) est disposé sur une nacelle de l'éolienne (100), dans lequel le point de mesure (123) se trouve de préférence sur une partie supérieure de la nacelle dans la direction verticale et le point de mesure (123) est en outre de préférence disposé de manière sensiblement immobile sur la nacelle (104).

4. Procédé selon l'une quelconque des revendications précédentes, dans lequel les premières vitesses du vent (uₓ) et les deuxièmes vitesses du vent (v_{y}) sont mesurées avec un anémomètre bidimensionnel (122), en particulier avec un anémomètre à ultrasons numérique.

5. Procédé selon l'une quelconque des revendications précédentes, dans lequel la première direction de mesure (x) et la deuxième direction de mesure (y) sont orientées perpendiculairement l'une à l'autre, dans lequel de préférence la première direction de mesure (x) et la deuxième direction de mesure (y) sont orientées sensiblement horizontalement.

6. Procédé selon l'une quelconque des revendications précédentes, dans lequel la fréquence de mesure pour la première direction de mesure (x) et pour la deuxième direction de mesure (y) est sensiblement identique.

7. Procédé selon l'une quelconque des revendications précédentes, dans lequel
- une des premières vitesses du vent (uₓ) et une des deuxièmes vitesses du vent (v_{y}) sont mesurées respectivement par paires et/ou sont mesurées sensiblement simultanément, et/ou
- au maximum 100 ms, de préférence au maximum 50 ms, sont présentes entre deux mesures des premières vitesses du vent (uₓ), et/ou au maximum 100 ms, de préférence au maximum 50 ms, entre deux mesures des deuxièmes vitesses du vent (v_{y}), et/ou
- le temps prédéfini de la période de mesure (ΔT) est inférieur à 10 secondes, en particulier inférieur à 8 secondes, de préférence inférieur ou égal à 6 secondes.

8. Procédé selon l'une quelconque des revendications précédentes, dans lequel la course de rotation du rotor (106) est comprise entre 115° et 125°.

9. Procédé selon l'une quelconque des revendications précédentes, comprenant l'étape :
de correction de la direction du vent (W) en fonction d'un angle de calage réglé et/ou d'une vitesse spécifique se formant.

10. Procédé selon l'une quelconque des revendications précédentes, dans lequel un signal de direction du vent caractérisant la direction du vent (W) est produit, et le procédé comprenant l'étape : de pondération du signal de direction du vent avec un facteur de pondération.

11. Procédé selon l'une quelconque des revendications précédentes, comprenant l'étape : d'établissement d'une vitesse du vent moyenne dont la moyenne a été calculée par évaluation scalaire des premières vitesses du vent (uₓ) et des deuxièmes vitesses du vent (v_{y}).

12. Procédé selon l'une quelconque des revendications précédentes, dans lequel l'éolienne (100) présente un codeur incrémental (125) pour la détection de la position du rotor, et de préférence un signal de sortie du codeur incrémental déclenche une mesure de la première vitesse du vent (uₓ) et de la deuxième vitesse du vent (v_{y}).

13. Procédé selon l'une quelconque des revendications précédentes, dans lequel l'établissement de la direction du vent (W) s'effectue par intervalles de temps prédéfinis, par exemple avec un intervalle de temps de 1 seconde, et pour l'établissement de la direction du vent (W) un nombre prédéfini de valeurs de mesure est pris en compte, dans lequel les valeurs de mesure représentent respectivement une des premières vitesses du vent et une des deuxièmes vitesses du vent.

14. Système (120) pour la détermination d'une direction du vent (W) sur une éolienne (100) avec un rotor (106), sur lequel au moins une pale de rotor (108) est disposée, comprenant
- une unité de détection de vent (122) disposée sur un point de mesure (123), qui est conçue pour la mesure de premières vitesses du vent (uₓ) dans une première direction de mesure (x) prédéfinie et de deuxièmes vitesses du vent (v_{y}) dans une deuxième direction de mesure (y) prédéfinie, différente de la première direction de mesure (x) respectivement avec une fréquence de mesure,
- un dispositif de commande (124) couplé à l'unité de détection de vent (122), qui est conçu
∘ pour mesurer des premières vitesses du vent (uₓ) et deuxièmes vitesses du vent (v_{y}) pour une période de mesure (ΔT), dans lequel la période de mesure (ΔT) est définie par une course de rotation du rotor (106) ou par un temps prédéfini, dans lequel la période de mesure (ΔT) est choisie de telle sorte que la pale de rotor (108) ou une des pales de rotor passe par le point de mesure (123) dans la période de mesure (ΔT), et
∘ pour déterminer une direction du vent (W) par évaluation vectorielle des premières vitesses du vent (uₓ) et des deuxièmes vitesses du vent (v_{y}),
**caractérisé en ce que** le dispositif de commande (124) est conçu pour déterminer une première vitesse du vent moyenne (U) par calcul de la moyenne des premières vitesses du vent (uₓ) et une deuxième vitesse du vent moyenne (V) par calcul de la moyenne des deuxièmes vitesses du vent (v_{y}) et pour établir la direction du vent (W) par évaluation vectorielle de la première vitesse du vent moyenne (U) et de la deuxième vitesse du vent moyenne (V).

15. Eolienne (100),
- qui est conçue pour mettre en œuvre un procédé selon l'une quelconque des revendications 1-13, et/ou
- comprenant un système (120) selon la revendication 14.
